# EUROPEAN PATENT APPLICATION

(11) **EP 1 906 575 A1**
(43) Date of publication of application: **02.04.2008**
(21) Application number: 05780514.5
(22) Date of filing: 22.08.2005
(51) Int. Cl.: H04J 15/00, H04Q 7/38, H04J 13/00, H04J 11/00

(54) **BASE STATION APPARATUS AND MOBILE STATION APPARATUS**

(71) Applicant: MATSUSHITA ELECTRIC INDUSTRIAL CO., LTD., Osaka 571-8501 (JP)
(72) Inventor: NAKA, Katsuyoshi, Matsushita Electric Industrial Co,.Ltd., 2-1-61, Shiromi,chuo-ku, Osaka 540-6207 (JP); MATSUO, Hidenori, Matsushita Electric Industrial Co,.Ltd., 2-1-61, Shiromi,chuo-ku, Osaka 540-6207 (JP); HAGA, Hiroki, Matsushita Electric Industrial Co,.Ltd., 2-1-61, Shiromi,chuo-ku, Osaka 540-6207 (JP)
(74) Representative: Zimmer, Franz-Josef
(86) International application number: PCT/JP2005/015233
(87) International publication number: WO 2007/023524

(57) **Abstract**

A base station apparatus that transmits frames in accordance with a communication format, and a mobile station apparatus that uses the frames to determine the communication format of the base station apparatus, and then performs an adaptive cell search in accordance with the determined communication format. The base station apparatus (100) comprises a plurality of antennas; a transmitting part (150) that transmits frames via the antennas; and a frame forming part (130) that forms, in accordance with the number of antennas to be used for the transmission, frames in which different synchronization sequences (SCH sequences) are arranged. Then, in the mobile station apparatus (200), an RF receiving part (210) receives the frames from the base station apparatus (100); a transmission format/frame timing determining part (240) determines the frame timing and the number of the used antennas; and a scrambling code identifying part (245) extracts, based on the frame timing and the number of the used antennas, the pilot signal from the frames and then uses the extracted pilot signal to identify the base station scrambling code.

## Description

### Technical Field

The present invention relates to a base station apparatus and a mobile station apparatus. More particularly, the present invention relates to a base station apparatus and a mobile station apparatus that perform multicarrier communication.

### Background Art

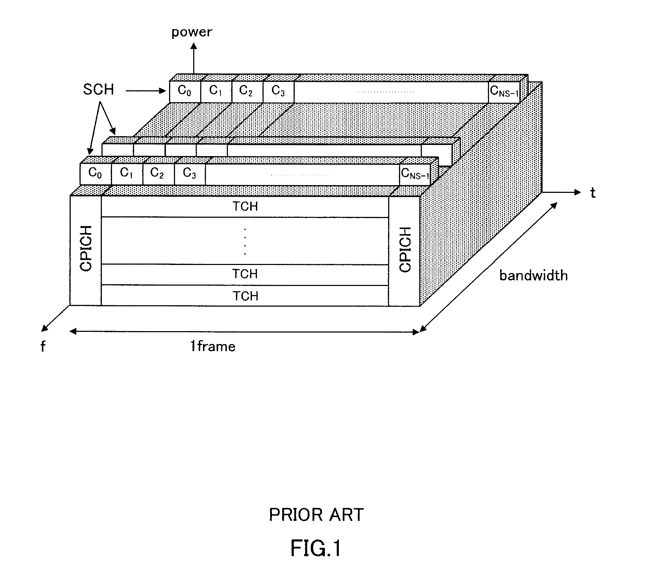

A method whereby a synchronization channel SCH is frequency-multiplexed has been proposed as a cell search method in OFCDM (see Non-patent Documents 1 and 2). First, a frame configuration diagram according to the prior art is shown in FIG.1. In this figure, TCH (Traffic Channel) indicates a normal data channel, and CPICH (Common Pilot Channel) indicates a common pilot channel that is a known signal. A synchronization channel, SCH (Synchronization Channel), is a known unique signal, and is frequency-multiplexed in stipulated subcarriers.

On the other hand, a receiving-side mobile station performs OFDM symbol timing detection, frame timing detection, and scrambling code identification by means of a three-step cell search algorithm. The operation of each step will be described in detail later herein.

### (1) First step: Symbol timing detection

A mobile station detects an OFDM symbol timing (that is, FFT window timing) using the correlation characteristics of OFDM guard intervals (Non-patent Document 3). Specifically, the guard interval correlation is calculated at each sample point for each OFDM symbol, this is averaged over one frame, and an OFDM symbol timing corresponding to the maximum correlation value is detected.

### (2) Second step: Frame timing detection

FFT processing is performed based on the OFDM symbol timing detected in the first step, and the following processing is performed on the signal that has undergone FFT processing. Namely, in-phase addition is performed over one frame length on a subcarrier-by-subcarrier basis of the correlation between a subcarrier component in which an SCH is transmitted, among subcarrier components separated by the FTT, and an SCH replica. Then correlation values that have undergone in-phase addition on a subcarrier-by-subcarrierbasis are further subjected to power addition in the frequency domain (that is, between a plurality of subcarriers) and the time domain (that is, between a plurality of frames), and an average correlation value is calculated. The timing at which the maximum average correlation value is calculated is detected, and is made a frame timing candidate.

### (3) Third step: Scrambling code identification

A CPICH multiplex symbol position is found by means of the frame timing detected in the second step. Thus, correlation is calculated using all scrambling code candidates that can be multiplied by the CPICH and a pilot signal replica. Then the scrambling code for which the maximum correlation value is calculated is detected, and is identified as being a cell-specific scrambling code.

Further, 3GPP, which is a standards organization, studies 3GPP RAN LTE (Long Term Evolution) to further improve the current third-generation mobile communication system. To be more specific, the above-described OFDM scheme is studied as a downlink wireless transmission scheme (see Non-Patent Document 3). Further, it is studied to introduce a MIMO communication scheme for satisfying throughput requirements (see Non-Patent Document 4). Further, for pilot transmission of the base station apparatus, transmission for single antenna and transmission for multi-antenna are proposed (see Non-Patent Document 5).
Non-patent Document 1: Yukiko Hanada, Hiroyuki Atarashi, Kenichi Higuchi, and Mamoru Sawahashi, "3-Step Cell Search Performance using frequency-multiplexed SCH for Broadband Multi-carrier CDMA Wireless Access," RCS2001-91, July 2001
Non-patent Document 2: Yukiko Hanada, Kenichi Higuchi, and Mamoru Sawahashi, "3-Step Fast Cell Search Method and Its performance for Broadband Multi-carrier CDMA Wireless Access," RCS2000-170, November 2000
Non-Patent Document 3: 3GPP, R1-050673, Drafting group1, "Text proposal for FDD UL SC-FDMA, FDD DL OFDMA"
Non-Patent Document 4: 3GPP TR 25.913 v2.0.0 "Requirements for Evolved UTRA and UTRAN"
Non-Patent Document 5: 3GPP, R1-050464, NTT DoCoMo, "Physical Channel Structures for Evolved UTRA"

### Disclosure of Invention

### Problems to be Solved by the Invention

However, to combine multicarrier communication andmulti-antenna communication, it is necessary to solve various problems. Particularly, to perform cell search in the system where multi-antenna communication and single antenna communication are performed, it is not possible to determine at the mobile station apparatus a communication scheme employed by the base station apparatus only by transmitting the conventional frame from the base station apparatus. Therefore, there is a problem that the mobile station apparatus cannot perform adaptive processing (including cell search processing) according to the communication scheme of the base station apparatus.

It is therefore an object of the present invention to provide a base station apparatus and a mobile station apparatus that perform multicarrier communication, and more particularly, to provide a base station apparatus that transmits a frame according to communication schemes, and a mobile station apparatus that determines the communication scheme of the base station apparatus from this frame and performs adaptive cell search processing according to communication schemes.

### Means for Solving the Problem

The base station apparatus of the present invention performs multicarrier communication and adapts a configuration including: a plurality of antennas; a transmitting section that transmits a frame through the antennas; and a frame forming section that forms a frame where at least one of a synchronization sequence to be mapped and subcarriers to which the synchronization sequence is mapped is different according to the number of antennas to be used for transmission out of the plurality of antennas.

The mobile station apparatus of the present invention performs cell search using a frame transmitted from the base station apparatus and adopts a configuration including: a receiving section that receives a frame where different synchronization sequences are mapped according to the number of antennas used by the base station apparatus; a correlating section that calculates correlations by sequentially multiplying the received frame and all candidates for the synchronization sequences; a detecting section that detects a frame timing and the number of antennas used by the base station apparatus based on the correlation values calculated by the correlating section; and a scrambling code identifying section that extracts a pilot signal from the received frame based on the detected frame timing and the number of antennas and identifies a base station scrambling code using the pilot signal.

### Advantageous Effect of the Invention

According to the present invention, it is possible to provide a base station apparatus and a mobile station apparatus that perform multicarrier communication, and more particularly, provide a base station apparatus that transmits a frame according to communication schemes, and a mobile station apparatus that determines the communication scheme of the base station apparatus from this frame and performs adaptive cell search processing according to communication schemes.

### Brief Description of Drawings

FIG.1 shows the conventional frame configuration;
FIG.2 is a block diagram showing a configuration of a base station apparatus according to Embodiment 1 of the present invention;
FIG.3 shows a frame configuration of Embodiment 1;
FIG.4 is a block diagram showing a configuration of a mobile station apparatus of Embodiment 1;
FIG.5 is a flowchart illustrating the operation of the mobile station apparatus in FIG.4;
FIG.6 shows another frame configuration of Embodiment 1;
FIG.7 is a block diagram showing a configuration of a base station apparatus according to Embodiment 2;
FIG.8 shows a frame configuration of Embodiment 2;
FIG.9 is a block diagram showing a configuration of a mobile station apparatus according to Embodiment 2;
FIG.10 is a flowchart illustrating the operation of the mobile station apparatus in FIG.9;
FIG.11 shows another frame configuration of Embodiment 2;
FIG.12 is a block diagram showing a configuration of a base station apparatus according to Embodiment 3;
FIG.13 shows a frame configuration of Embodiment 3;
FIG.14 is a block diagram showing a configuration of a mobile station apparatus according to Embodiment 3;
FIG.15 is a flowchart illustrating the operation of the mobile station apparatus in FIG.14;
FIG.16 shows another frame configuration of Embodiment 3; and
FIG.17 shows a configuration of synchronization sequences of Embodiment 4.

### Best Mode for Carrying Out the Invention

Embodiments of the present invention will be described in detail below with reference to the accompanying drawings. In the embodiments, the same components will be assigned the same reference numerals without further explanations.

### (Embodiment 1)

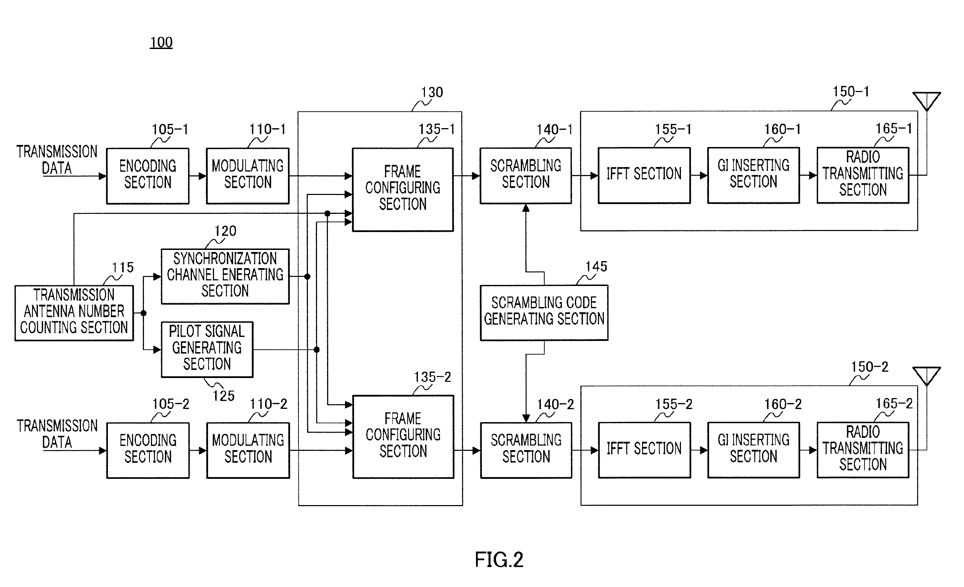

As shown in FIG.2, base station apparatus 100 of Embodiment 1 has encoding section 105, modulating section 110, transmission antenna number counting section 115, synchronization channel generating section 120, pilot signal generating section 125, frame forming section 130, scrambling section 140, scrambling code generating section 145 and transmitting section 150. Frame forming section 130 has frame configuring sections 135 of the same number as the number of antennas of base station apparatus 100. Transmitting section 150 has IFFT section 155, GI inserting section 160 and radio transmitting section 165.

This base station apparatus 100 supports at least two communication schemes, and in this embodiment, is applicable to MIMO (or MISO) and SISO (or SIMO). Here, for ease of explanation, it is assumed that base station apparatus 100 has two antennas, utilizes two antennas when performing MIMO communication, and utilizes only one of the antennas when performing SISO communication.

Encoding section 105 receives transmission data, performs predetermined encoding and outputs the encoded signal to modulating section 110.

Modulating section 110 receives the encoded signal, performs predetermined primary modulation (generally, primary modulation according to QoS and a state of a radio channel), and outputs the modulated signal to frame forming section 130.

Transmission antenna number counting section 115 counts the number of antennas to be used for transmission and outputs information of the number of antennas to be used for transmission to synchronization channel generating section 120, pilot signal generating section 125 and frame forming section 130. When base station apparatus 100 performs MIMO communication, information of the number of antennas for use designates two, and, when base station apparatus 100 performs SISO communication, information of the number of antennas for use designates one. That is, the information of the number of antennas for use can be utilized as "communication scheme information" showing the communication scheme employed by base station apparatus 100.

Synchronization channel generating section 120 receives communication scheme information (here, information of the number of antennas for use) from transmission antenna number counting section 115, generates a synchronization channel (SCH sequence) according to the communication scheme information, and outputs the generated SCH sequence to frame forming section 130. To be more specific, this embodiment uses two different SCH sequences (SCH1 sequence and SCH2 sequence) according to communication scheme information (MIMO communication that uses two antennas or SISO communication that uses one antenna), and so synchronization channel generating section 120 outputs an SCH1 sequence to frame forming section 130 when inputted communication scheme information designates MIMO communication and outputs an SCH2 sequence to frame forming section 130 when inputted communication scheme information designates SISO communication.

Pilot signal generating section 125 receives the communication scheme information (here, information of the number of antennas for use) from transmission antenna number counting section 115 and outputs pilot signals according to the communication scheme information (the number of antennas for use) . To be more specific, when communication scheme information designates MIMO communication, it is necessary to transmit one pilot signal from one antenna in MIMO communication, and so pilot signal generating section 125 outputs two different pilot signals (CPICH1 and CPICH2). When communication scheme information designates SISO communication, pilot signal generating section 125 outputs one pilot signal (here, CPICH1). Pilot signals outputted in MIMO communication have patterns that are orthogonal to each other.

Frame forming section 130 receives the modulated signal from modulating section 110, an SCH sequence from synchronization channel generating section 120, and a CPICH from pilot signal generating section 125, and forms a frame according to the communication scheme information from transmission antenna number counting section 115.

In Embodiment 1, when communication scheme information designates MIMO, frame forming section 130 inserts an SCH1 sequence in the frame. On the other hand, when communication scheme information designates SISO, frame forming section 130 inserts an SCH2 sequence in the frame. That is, synchronization sequences (SCH sequences) having different signal patterns are inserted according to communication schemes (for example, the number of antennas for use). Further, when communication scheme information designates MIMO, frame forming section 130 inserts CPICH1 into a frame to be transmitted from one of the antennas, and inserts CPICH2 into a frame to be transmitted from the other antenna. On the other hand, when communication scheme information designates SISO, frame forming section 130 forms a frame where CPICH1 is inserted.

That is, when the communication scheme employed by base station apparatus 100 is MIMO communication, frame forming section 130 forms a frame where mutually different pilot signals (CPICHs) according to the number of antennas for use are inserted and where a common SCH1 sequence is inserted. On the other hand, when the communication scheme employed by base station apparatus 100 is SISO communication, frame forming section 130 forms a frame where one type of pilot signals (here, CPICH1) is inserted and where an SCH2 sequence which is a different sequence from the SCH1 sequence is inserted.

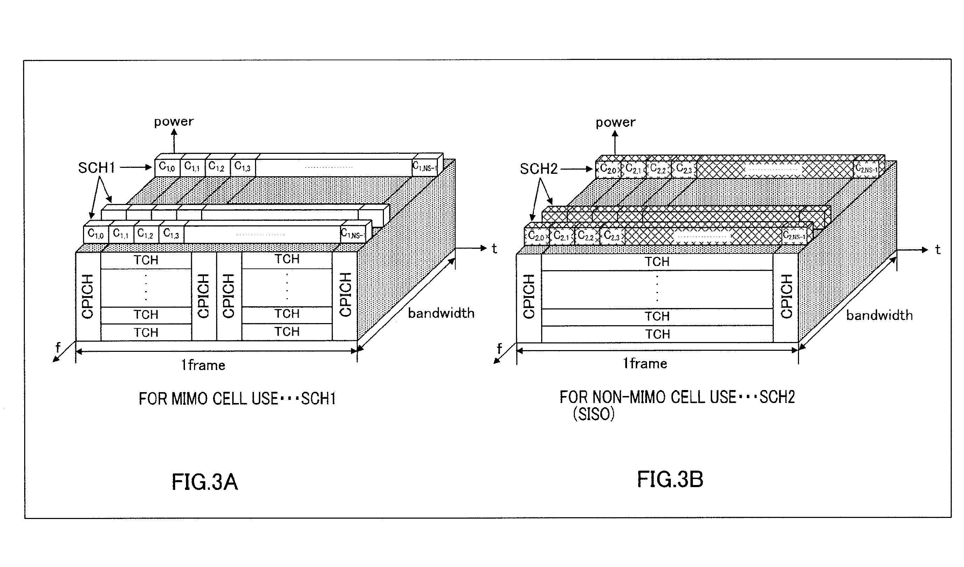

To be more specific, when the communication scheme is the MIMO communication scheme as shown in FIG.3, a frame is formed where an SCH1 sequence is mapped in the time domain aligned with the beginning of the frame in predetermined subcarriers (FIG.3A). Further, when the communication scheme is the SISO communication scheme, a frame is formed where an SCH2 sequence is mapped in the time domain aligned with the beginning of the frame in the same subcarriers as the subcarriers of a frame of the MIMO communication scheme (FIG.3B). In addition, in the MIMO communication scheme, even if a frame includes CPICHs at the same rate in the SISO communication frame, transmitting two frames from two antennas, for example, is equivalent to including double the CPICHs of the SISO communication frame, and so the frame configuration is as shown in FIG.3A. That is, FIG.3A shows a format where CPICHs transmitted from two antennas are time-multiplexed.

When communication scheme information designates MIMO communication, frame forming section 130 outputs the frames formed as described above to different scrambling sections 140 (scrambling sections 140-1 and 140-2). Further, when communication scheme information designates SISO communication, frame forming section 130 outputs the frames formed as described above to one of scrambling sections 140 (here, scrambling section 140-1).

Scrambling section 140 scrambles the frame from frame forming section 130 and outputs the scrambled frame to transmitting section 150.

IFFT section 155 performs IFFT processing on the frame, GI inserting section 160 inserts guard intervals, radio transmitting section 165 performs radio processing such as up-conversion, and transmitting section 150 transmits the frame via antennas.

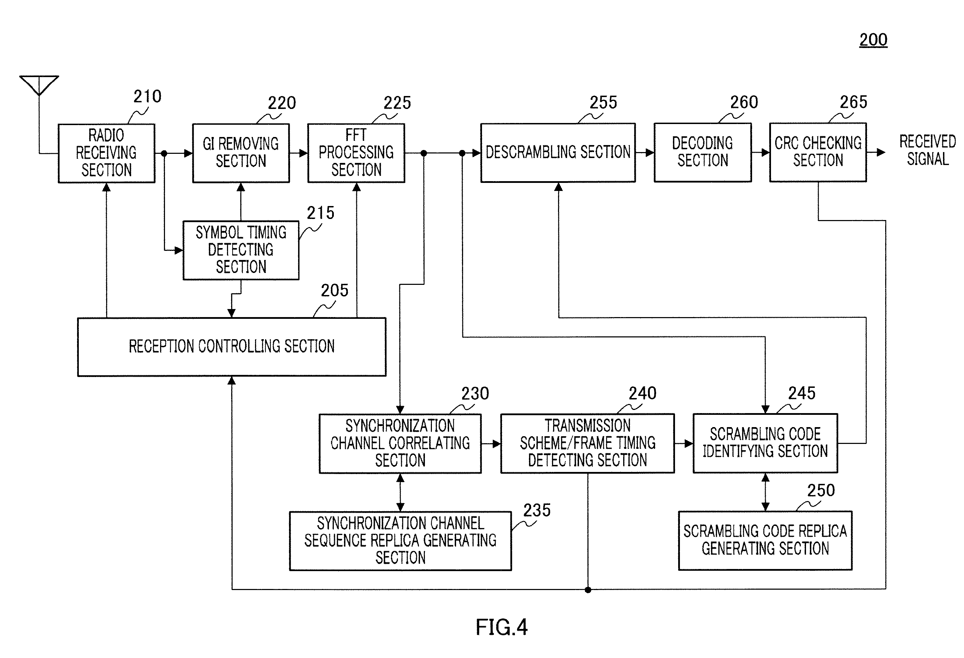

As shown in FIG.4, mobile station apparatus 200 of Embodiment 1 has reception controlling section 205, radio receiving section 210, symbol timing detecting section 215, GI removing section 220, FFT processing section 225, transmission scheme/frame timing detecting section 240, scrambling code identifying section 245, scrambling code replica generating section 250, descrambling section 255, decoding section 260 and CRC checking section 265.

Reception controlling section 205 controls output destination of the output signals from radio receiving section 210 and FFT processing section 225 depending on what condition mobile station apparatus 200 is in, that is, what step in the initial cell search mode mobile station apparatus 200 is in, or depending on whether or not the reception mode is the normal reception mode. To be more specific, reception controlling section 205 outputs output destination command signals to radio receiving section 210 and FFT processing section 225 and controls the output destination of the output signals from radio receiving section 210 and FFT processing section 225. The output destination command signal outputted to radio receiving section 210 designates that the output destination is symbol timing detecting section 215 when mobile station apparatus 200 is in the first step of the initial cell search mode, and designates that the output destination is GI removing section 220 when mobile station apparatus 200 is in steps other than the first step. Further, the output destination command signal outputted to FFT processing section 225 designates that the output destination is synchronization channel correlating section 230 when mobile station apparatus 200 is in the second step of the initial cell search mode, and designates that the output destination is scrambling code identifying section 245 when mobile station apparatus 200 is in the third step of the initial cell search mode. Further, when the reception mode is the normal reception mode, the output destination command signal designates that the output destination is descrambling section 255.

Radio receiving section 210 receives a signal from base station apparatus 100 via antennas and performs RF processing such as down-conversion. Radio receiving section 210 outputs the signal after RF processing to the output destination designated by the output destination command signal from above-described reception controlling section 205.

When mobile station apparatus 200 is in the first step of the initial cell search mode, symbol timing detecting section 215 receives the signal after RF processing from radio receiving section 210. Symbol timing detecting section 215 calculates guard interval correlation and detects the OFDM symbol timing using guard interval correlation characteristics in the OFDM symbol. This OFDM symbol timing is the FFT window timing for performing the FFT processing. Symbol timing detecting section 215 outputs the symbol timing detection result to GI removing section 220 and outputs a first step completion report signal for reporting that the symbol timing is detected, that is, the first step in cell search is finished, to reception controlling section 205.

GI removing section 220 removes guard intervals from the received signal after RF processing according to the OFDM symbol timing from symbol timing detecting section 210 and outputs the result to FFT processing section 225.

FFT processing section 225 receives the signal after guard intervals are removed, from GI removing section 220 on a per OFDM symbol basis and performs FFT processing on the received signal. FFT processing section 225 outputs the signal after FFT processing to the output destination according to the output destination command signal from reception controlling section 205. To be more specific, when mobile station apparatus 200 is currently in the second step of cell search, FFT processing section 225 receives an output destination command signal designating that the output destination is synchronization channel correlating section 230, and outputs the signal after FFT processing to synchronization channel correlating section 230. Further, when mobile station apparatus 200 is currently in the third step of cell search, FFT processing section 225 receives an output destination command signal designating that the output destination is scrambling code identifying section 245, and outputs the signal after FFT processing to scrambling code identifying section 245. Still further, when FFT processing section 225 receives from reception controlling section 205, output destination command signals other than the above-described output destination command signal designating that the output destination is synchronization channel correlating section 230, and the output destination command signal designating that the output destination is scrambling code identifying section 145, FFT processing section 225 outputs the signal after FFT processing to descrambling section 255.

Synchronization channel correlating section 230 receives the signal after FFT processing from FFT processing section 225, extracts subcarrier signals of one frame length multiplexed with SCHs, calculates time domain correlations between the extracted signals and two SCH sequence replicas (SCH1 sequence replica and SCH2 sequence replica) inputted from synchronization channel sequence replica generating section 235, and calculates correlation values by performing in-phase addition. Further, synchronization channel correlating section 230 performs power combining of the correlation values calculated per subcarrier, between the subcarriers per SCH1 sequence or per SCH2 sequence, and outputs the power combined result of correlation values in each symbol to transmission scheme/frame timing detecting section 240. This power combined result may be referred to as "SCH1 correlation value" and "SCH2 correlation value."

Synchronization channel sequence replica generating section 235 generates an SCH sequence, which is a frame synchronization channel, determined in advance by the system, and outputs the sequence to synchronization channel correlating section 230 as an SCH sequence replica. In Embodiment 1, the frame transmitted from base station apparatus 100 may include two different SCH sequences (SCH1 sequence and SCH2 sequence), and so synchronization channel sequence replica generating section 235 generates an SCH1 sequence and an SCH2 sequence and outputs the sequences to synchronization channel correlating section 230.

Transmission scheme/frame timing detecting section 240 receives from synchronization channel correlating section 230 the correlation values (after power combining) of the SCH1 sequence and the SCH2 sequence at each symbol timing in one frame, and detects the timing providing the maximum correlation value among the received correlation values and the type of the SCH sequence (that is, whether the SCH sequence is an SCH1 sequence or an SCH2 sequence).

As a result of the detection, when the correlation value of the SCH1 sequence is the maximum correlation value, transmission scheme/frame timing detecting section 240 determines that the transmission scheme employed by base station apparatus 100 to transmit the frame is MIMO, and identifies the timing providing the maximum correlation value as the frame timing. Transmission scheme/frame timing detecting section 240 outputs transmission scheme information and the detected frame timing information to scrambling code identifying section 245 and reception controlling section 205.

On the other hand, as a result of the detection, when the correlation value of the SCH2 sequence is the maximum correlation value, transmission scheme/frame timing detecting section 240 determines that the transmission scheme employed by base station apparatus 100 to transmit the frame is SISO, and identifies the timing providing the maximum correlation value as the frame timing. Transmission scheme/frame timing detecting section 240 outputs transmission scheme information and the detected frame timing information to scrambling code identifying section 245 and reception controlling section 205.

Scrambling code identifying section 245 receives from FFT processing section 225 a CPICH (common pilot signal) mapped at a predetermined position such as the beginning of the frame. Further, scrambling code identifying section 245 receives communication scheme information and frame timing information from transmission scheme/frame timing detecting section 240. Still further, scrambling code identifying section 245 receives a scrambling code replica from scrambling code replica generating section 250.

Scrambling code identifying section 245 calculates correlations using all candidates for the scrambling code replica and a known pilot signal at the timing of the CPICH according to the received frame timing information.

When communication scheme information designates MIMO, CPICHs (for example, CPICH1 and CPICH2) of the same number as the number of transmission antennas are orthogonal-multiplexed at the transmitting side (base station apparatus 100), and so scrambling code identifying section 245 calculates correlations between all candidates for the scrambling code replica and the known pilot signal for the CPICHs of the same number as the number of transmission antennas. When there are a plurality of CPICHs, scrambling code identifying section 245 adds correlation values of the same scrambling code replica.

Scrambling code identifying section 245 compares the correlation values of all candidates for the scrambling code replica (added correlation values in the case of MIMO), and identifies that the scrambling code corresponding to the maximum correlation value is the scrambling code for the searched cell. The identified scrambling code is outputted to descrambling section 255.

Scrambling code replica generating section 250 creates scrambling code replicas of all candidates and outputs the scrambling code replicas to scrambling code identifying section 245.

Descrambling section 255 receives the signal from FFT processing section 225. Further, descrambling section 255 receives a scrambling code from scrambling code identifying section 245. Descrambling section 255 descrambles the received signal using this scrambling code and outputs the descrambled signal to decoding section 260.

Decoding section 260 receives the descrambled signal, performs appropriate error correction decoding and outputs the error correction decoding result to CRC checking section 265.

CRC checking section 265 performs CRC error check on the error correction decoding result from decoding section 260 and determines that the initial cell search is completed when there is no error. On the other hand, when there are errors, CRC checking section 265 outputs the CRC error check result to reception controlling section 205 so that the initial cell search is retried from the first step. When reception controlling section 205 receives this CRC error check result outputted when there are errors, reception controlling section 205 outputs to radio receiving section 210 an output destination command signal designating that the output destination is symbol timing detecting section 215.

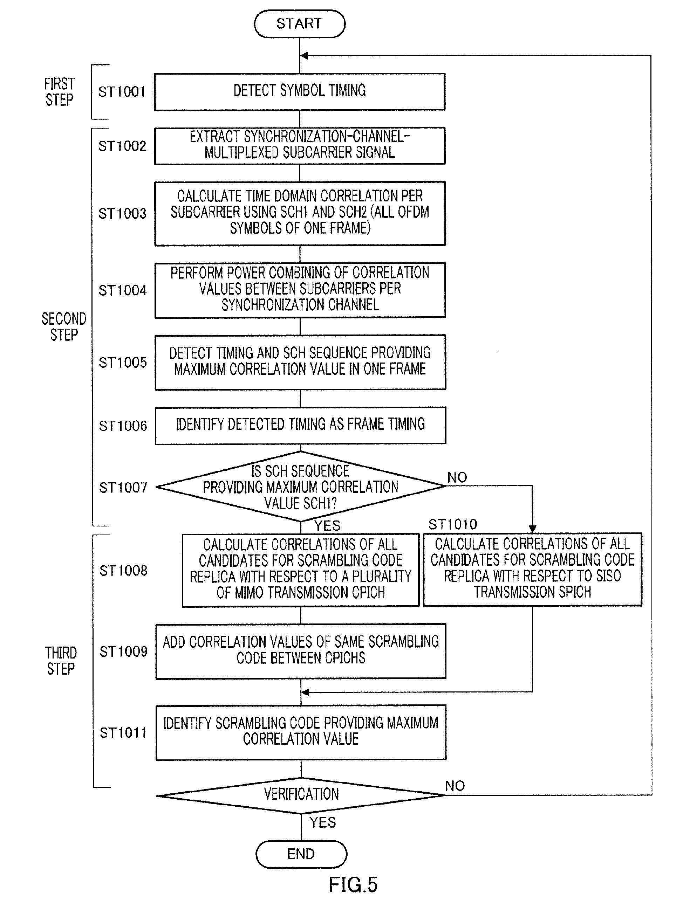

Next, the operation of mobile station apparatus 200 will be described with reference to the flowchart in FIG.5.

In step ST1001, symbol timing detecting section 215 of mobile station apparatus 200 calculates guard interval correlation, and detects the OFDM symbol timing using guard interval correlation characteristics in the OFDM symbol. This is the first step in cell search.

In step ST1002, synchronization channel correlating section 230 extracts subcarrier signals of one frame length multiplexed with SCHs from the received signal.

In step ST1003, synchronization channel correlating section 230 calculates correlations between the signals extracted in step ST1002 and SCH sequence replicas. To be more specific, a frame which may be used in Embodiment 1 adopts a configuration where an SCH1 sequence is mapped in the time domain aligned with the beginning of the frame in predetermined subcarriers when base station apparatus 100 of the transmitting side performs MIMO communication, or a configuration where an SCH2 sequence is mapped in the time domain aligned with the beginning of the frame in predetermined subcarriers when base station apparatus 100 of the transmitting side performs SISO communication. Therefore, synchronization channel correlating section 230 calculates time domain correlations between the signals extracted in step ST1002 and two SCH sequence replicas (SCH1 sequence replica and SCH2 sequence replica) over all symbols of one frame.

In step ST1004, synchronization channel correlating section 230 performs power combining of the correlation values calculated per subcarrier in step ST1003, per SCH1 sequence or per SCH2 sequence, between subcarriers.

In step ST1005, transmission scheme/frame timing detecting section 240 receives from synchronization channel correlating section 230, the correlation value (after power combining) of the SCH1 sequence and the SCH2 sequence at each symbol timing in one frame, and detects the timing providing the maximum correlation value among the received correlation values, and the type of the SCH sequence (that is, whether the SCH sequence is an SCH1 sequence or an SCH2 sequence).

In step ST1006, transmission scheme/frame timing detecting section 240 identifies the timing providing the maximum correlation value, detected in step ST1005, as the frame timing.

In step ST1007, transmission scheme/frame timing detecting section 240 determines whether or not the SCH sequence providing the maximum correlation value, detected in step ST1005, is an SCH1 sequence, that is, determines the transmission scheme at the transmitting side. Transmission scheme/frame timing detecting section 240 outputs the detection result to scrambling code identifying section 245 as communication scheme information.

As a result of detection, when the correlation value of the SCH1 sequence is the maximum correlation value, that is, when the communication scheme information outputted from transmission scheme/frame timing detecting section 240 designates MIMO (step ST1007: "Yes"), scrambling code identifying section 245 calculates correlations between a plurality of CPICHs (CPICH1 and CPICH2 in Embodiment 1) transmitted from base station apparatus 100 and all candidates for scrambling code replicas (step ST1008).

In step ST1009, scrambling code identifying section 245 adds correlation values of the same scrambling code replica between the CPICHs (CPICH1 and CPICH2) . In this way, mobile station apparatus 200 can specify the communication scheme employed by base station apparatus 100, and, as a result, it is possible to appropriately utilize CPICHs transmitted more than in single antenna communication and obtain a correlation gain. Therefore, scrambling code identification which will be described later can be performed more accurately, so that it is possible to realize fast cell search.

As a result of detection, when the correlation value of the SCH2 sequence is the maximum correlation value, that is, when the communication scheme information outputted from transmission scheme/frame timing detecting section 240 designates SISO (step ST1007:"No"), scrambling code identifying section 245 calculates correlations between a CPICH (CPICH 1 in Embodiment 1) transmitted from base station apparatus 100 and all candidates for the scrambling code replicas (step ST1010).

In step ST1011, scrambling code identifying section 245 compares correlation values of all candidates for the scrambling code replicas (in the case of MIMO, added correlation values), and identifies that the scrambling code for the maximum correlation value is the scrambling code for the searched cell. The identified scrambling code is outputted to descrambling section 255. Descrambling is performed using the identified scrambling code, and after error correction decoding and CRC check, verification is performed according to CRC check results.

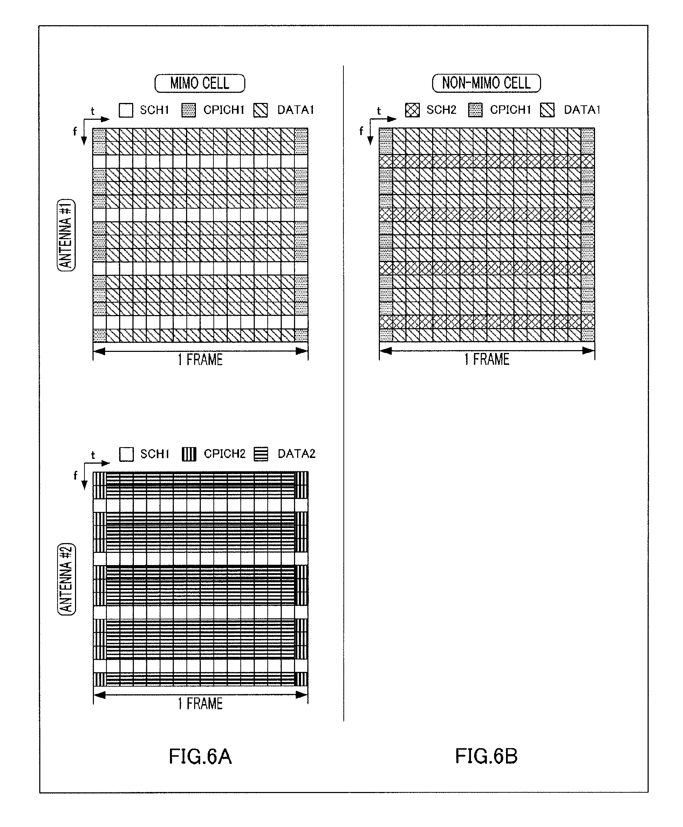

FIG.3 shows the OFCDM frame format, but this is by no means limiting, and the OFDM frame format as shown in FIG.6 is also possible.

Further, in the transmission format for MIMO cell use in FIG.6A, an SCH1 sequence is mapped to the same subcarriers for antenna #1 and antenna #2, but this only defines subcarriers for SCH1 use, and a method for transmitting an SCH1 sequence is not particularly defined. Generally, it is possible to utilize various transmission methods such as a method of transmitting an SCH1 sequence only from antenna #1 and a method of using TSTD (Time Switched Transmit Diversity) that switches transmission antennas per TTI or per frame. With the present invention, the method of distributing SCH sequences between transmission antennas is not particularly defined, and it is only necessary to make subcarrier positions for transmitting SCH1 sequences common.

Further, in the above description, the information of the number of antennas for use is utilized as communication scheme information, and a frame is utilized where a mapped SCH sequence is changed depending on whether or not communication is MIMO communication, but this is by no means limiting, and it is also possible to utilize a frame where a mapped SCH sequence is changed according to the number of antennas for use even when MIMO communication is employed. The point is to distinguish between MIMO communication and communication other than MIMO communication, and further, even in MIMO communication, distinguish between differences in communication schemes such as the number of antennas for use, by the type of the SCH sequence in the frame.

In this way, according to Embodiment 1, base station apparatus 100 performs multicarrier communication and has: a plurality of antennas; transmitting section 150 that transmits a frame via the antennas; and frame forming section 130 that forms a frame where different synchronization sequences (SCH sequences) are mapped according to the number of antennas to be used for transmission (information of the number of antennas for use) out of the plurality of antennas.

By this means, by specifying the type of the SCH sequence in the received frame at the frame receiving side (mobile station apparatus 200), the number of antennas used at the transmitting side can be specified. As a result, when base station apparatus 100 employs a communication scheme, such as MIMO communication, that transmits different pilot signals from a plurality of antennas, that is, when base station apparatus 100 employs a communication scheme having a larger number of pilot signals than communication schemes, such as SISO communication, that utilize only one antenna, if the communication scheme can be specified at the receiving side, it is possible to identify the base station scrambling code using many pilot signals in the third step of cell search. Therefore, a correlation gain can be obtained, so that it is possible to identify the scrambling code more accurately, and, as a result, realize fast cell search.

Further, according to Embodiment 1, base station apparatus 100 performs multicarrier communication and has: a plurality of antennas; transmitting section 150 that transmits frames via the antennas using MIMO communication or a communication scheme other than MIMO communication; and frame forming section 130 that forms a frame where different synchronization sequences are mapped according to the communication scheme.

Still further, according to Embodiment 1, mobile station apparatus 200 performs cell search using a frame transmitted from base station apparatus 100 and has: radio receiving section 210 that receives a frame where different synchronization sequences (SCH sequences) are mapped according to the number of antennas used at base station apparatus 100; synchronization channel correlating section 230 that calculates correlations by multiplying the received frame and all candidates for the synchronization sequence (SCH1 sequence and SCH2 sequence in this embodiment); transmission scheme/frame timing detecting section 240 that detects the frame timing and the number of antennas used at base station apparatus 100 based on the correlation values calculated by synchronization channel correlating section 230; and scrambling code identifying section 245 that extracts a pilot signal from the received frame based on the detected frame timing and the number of antennas and identifies the base station scrambling code using the pilot signal.

By this means, by specifying the type of the SCH sequence in the received frame, it is possible to specify the number of antennas used at the transmitting side. As a result, when base station apparatus 100 employs a communication scheme, such as MIMO communication, that transmits different pilot signals from a plurality of antennas, that is, when base station apparatus 100 employs a communication scheme transmitting a larger number of pilot signals than communication schemes, such as SISO communication, that utilize only one antenna, if the communication scheme can be specified at the receiving side, it is possible to identify the base station scrambling code using many pilot signals in the third step of cell search. Therefore, a correlation gain can be obtained, so that it is possible to identify the scrambling codemore accurately, and, as a result, realize fast cell search.

Further, according to Embodiment 1, mobile station apparatus 200 performs cell search using a frame transmitted from base station apparatus 100 and has radio receiving section 210 that receives a frame where different synchronization sequences (SCH sequences) are mapped according to the communication scheme employed by base station apparatus 100, specifically, according to MIMO communication or communication schemes other than MIMO communication; synchronization channel correlating section 230 that calculates correlations by multiplying the received frame and all candidates for the synchronization sequence (SCH1 sequence and SCH2 sequence in this embodiment); transmission scheme/frame timing detecting section 240 that detects the frame timing and the communication scheme employed by base station apparatus 100 based on the correlation values calculated by synchronization channel correlating section 230; and scrambling code identifying section 245 that extracts the pilot signal from the received frame based on the detected frame timing and communication scheme and identifies the base station scrambling code using the pilot signal.

### (Embodiment 2)

In the frame of Embodiment 1, different SCH sequences (for example, SCH1 sequence and SCH2 sequence) are mapped according to transmission schemes (for example, MIMO communication scheme and SISO communication scheme) of base station apparatus 100. By contrast with this, in Embodiment 2, the base station apparatus configures a frame by changing combinations (sets) of subcarriers where an SCH sequence is mapped according to communication schemes of the base station apparatus. That is, even if communication schemes are different, the same SCH sequence is used. However, by changing the mapped subcarrier set according to communication schemes, the frame receiving side specifies the subcarrier set where an SCH sequence is mapped in the received frame, and thereby can specify the transmission scheme at the transmitting side.

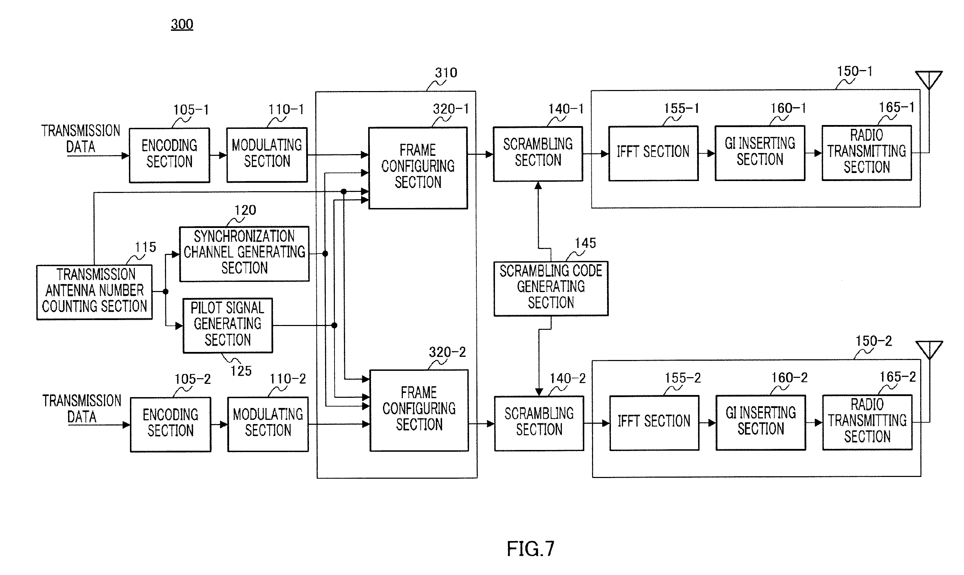

As shown in FIG.7, base station apparatus 300 of Embodiment 2 has frame forming section 310, and this frame forming section 310 has frame configuring sections 320 of the same number as the number of antennas of base station apparatus 300.

Frame forming section 310 receives the modulated signal from modulating section 110, an SCH sequence from synchronization channel generating section 120, and a CPICH from pilot signal generating section 125, and forms a frame according to the communication scheme information from transmission antenna number counting section 115.

In Embodiment 2, when the communication scheme information designates MIMO, frame forming section 310 inserts an SCH2 sequence in the frame by mapping the SCH2 sequence to a first combination (set) of subcarriers. On the other hand, when the communication scheme information designates SISO, frame forming section 310 inserts an SCH2 sequence in the frame by mapping the SCH2 sequence to a second combination (set) of subcarriers. Further, when the communication scheme information designates MIMO, frame forming section 310 inserts CPICH1 into a frame to be transmitted from one of the antennas, and inserts CPICH2 into a frame to be transmitted from the other antenna. On the other hand, when the communication scheme information designates SISO, frame forming section 310 forms a frame where CPICH1 is inserted.

That is, when the communication scheme employed by base station apparatus 300 is MIMO communication, frame forming section 310 forms a frame where mutually different pilot signals (CPICHs) according to the number of antennas for use are inserted, and an SCH2 sequence is inserted to a first combination (set) of subcarriers. On the other hand, when the communication scheme employed by base station apparatus 300 is SISO communication, frame forming section 310 forms a frame where one type of pilot signals (here, CPICH1) is inserted, and an SCH2 sequence is inserted to a second combination (set) of subcarriers.

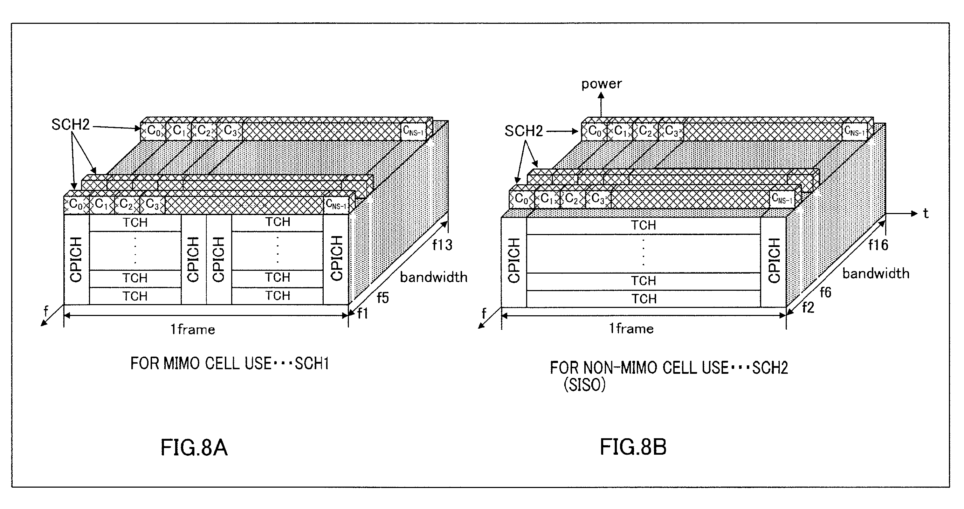

To be more specific, as shown in FIG.8, when the communication scheme is the MIMO communication scheme, a frame is formed where an SCH2 sequence is mapped in the time domain aligned with the beginning of the frame in the first combination (set) of subcarriers (FIG.8A) . Further, when the communication scheme is the SISO communication scheme, a frame is formed where an SCH2 sequence is mapped in the time domain aligned with the beginning of the frame in the second combination (set) of subcarriers (FIG. 8B). In addition, in FIG. 8, the first combination (set) of subcarriers is formed with f₁, f₅, ..., f₁₃, ..., and the second combination (set) of subcarriers is formed with f₂, f₆, ..., f₁₆, .... Further, in the MIMO communication scheme, even if a frame includes CPICHs at the same rate in the SISO communication frame, transmitting two frames from two antennas, for example, is equivalent to including double the CPICHs of the SISO communication frame, and so the frame configuration is as shown in FIG.8A.

When communication scheme information designates MIMO communication, frame forming section 310 outputs the frames formed as described above to different scrambling sections 140 (scrambling sections 140-1 and 140-2). Further, when communication scheme information designates SISO communication, frame forming section 310 outputs the frames formed as described above to one of scrambling sections 140 (here, scrambling section 140-1).

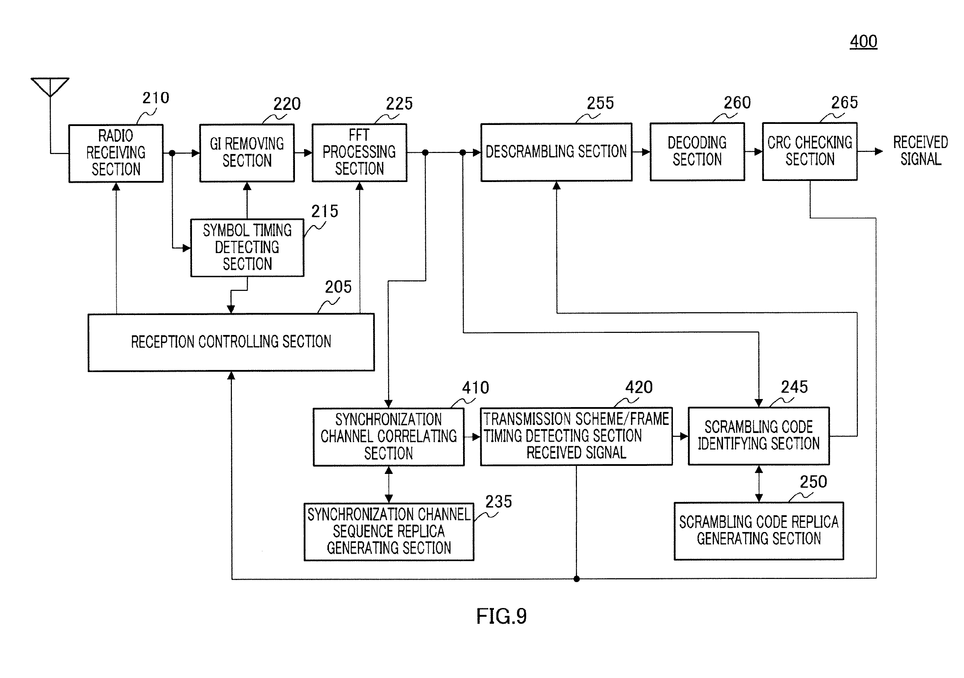

As shown in FIG.9, mobile station apparatus 400 of Embodiment 2 has synchronization channel correlating section 410 and transmission scheme/frame timing detecting section 420.

Synchronization channel correlating section 410 receives the signal after FFT processing from FFT processing section 225, extracts subcarrier signals of one frame length multiplexed with SCHs, calculates time domain correlations between the extracted signals and SCH sequence replicas (here, SCH2 sequence replicas) inputted from synchronization channel sequence replica generating section 235, and calculates correlation values by performing in-phase addition. Further, synchronization channel correlating section 410 performs per subcarrier set, power combining of the correlation values calculated per subcarrier, and outputs the power combined result of correlation values for each subcarrier set in each symbol (here, subcarrier set 1 and subcarrier set 2) to transmission scheme/frame timing detecting section 420. Hereinafter, the power combined results may be referred to as "subcarrier set 1 correlation value" and "subcarrier set 2 correlation value."

Transmission scheme/frame timing detecting section 420 receives the correlation values (after power combining) for each subcarrier set at each symbol timing in one frame from synchronization channel correlating section 410, and detects the timing providing the maximum correlation value among the received correlation values and the type of the subcarrier set (that is, whether the subcarrier set is subcarrier set 1 or subcarrier set 2).

As a result of detection, when the correlation value of subcarrier set 1 is the maximum correlation value, transmission scheme/frame timing detecting section 420 identifies that the transmission scheme employed by base station apparatus 300 to transmit the frame is MIMO, and identifies the timing providing the maximum correlation value as the frame timing. Transmission scheme/frame timing detecting section 420 then outputs transmission scheme information and the detected frame timing information to scrambling code identifying section 245 and reception controlling section 205.

On the other hand, as a result of detection, when the correlation value of subcarrier set 2 is the maximum correlation value, transmission scheme/frame timing detecting section 420 identifies that the transmission scheme employed by base station apparatus 300 to transmit the frame is SISO, and identifies the timing providing the maximum correlation value as the frame timing. Transmission scheme/frame timing detecting section 420 outputs transmission scheme information and the detected frame timing information to scrambling code identifying section 245 and reception controlling section 205.

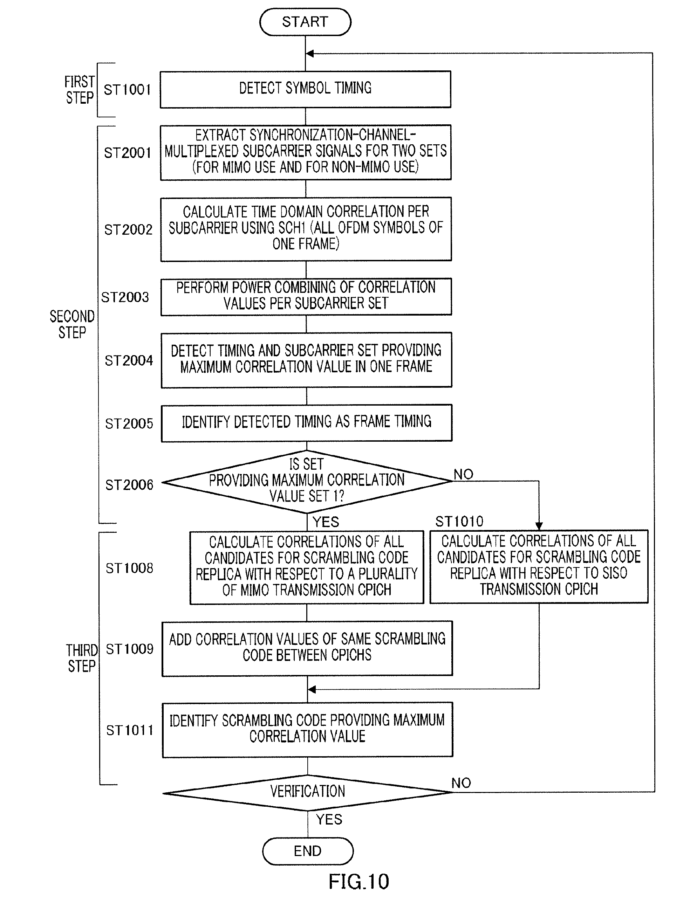

Next, the operation of mobile station apparatus 400 will be described with reference to the flowchart in FIG.10.

In step ST2001, synchronization channel correlating section 410 extracts subcarrier signals of one frame length multiplexed with SCHs from the received signal. That is, in this case, synchronization channel correlating section 410 extracts subcarrier signals corresponding to two sets, included in subcarrier set 1 (for MIMO use) and subcarrier set 2 (for non-MIMO use, that is, for SISO use).

In step ST2002, synchronization channel correlating section 410 calculates correlations between the signals extracted in step ST2001 and SCH sequence replicas. To be more specific, a frame which may be used in Embodiment 2 adopts a configuration where an SCH2 sequence is mapped in the time domain aligned with the beginning of the frame in subcarriers included in subcarrier set 1 when base station apparatus 100 of the transmitting side performs MIMO communication, or a configuration where an SCH2 sequence is mapped in the time domain aligned with the beginning of the frame in subcarriers included in subcarrier set 2 when base station apparatus 100 of the transmitting side performs SISO communication. Therefore, synchronization channel correlating section 410 calculates time domain correlations between the signals extracted in step ST2001 and SCH sequence replicas (here, SCH2 sequence replicas) over all symbols of one frame.

In step ST2003, synchronization channel correlating section 410 performs per subcarrier set, power combining of the correlation values calculated per subcarrier in step ST2002.

In step ST2004, transmission scheme/frame timing detecting section 420 receives the correlation values (after power combining) for each subcarrier set at each symbol timing in one frame from synchronization channel correlating section 410, and detects the timing providing the maximum correlation value among the received correlation values and the type of the subcarrier set (that is, whether the subcarrier set is subcarrier set 1 or subcarrier set 2).

In step ST2005, transmission scheme/frame timing detecting section 420 identifies the detected timing providing the maximum correlation value as the frame timing.

In step ST2006, transmission scheme/frame timing detecting section 420 identifies whether or not the subcarrier set providing the maximum correlation value is subcarrier set 1, detected in step ST2004, that is, identifies the transmission scheme at the transmitting side. Transmission scheme/frame timing detecting section 420 then outputs the identification result to scrambling code identifying section 245 as communication scheme information.

As a result of identification, when the correlation value of subcarrier set 1 is the maximum correlation value, that is, when the communication scheme information outputted from transmission scheme/frame timing detecting section 420 designates MIMO (step ST2006: "Yes"), scrambling code identifying section 245 calculates correlations between a plurality of CPICHs (CPICH1 and CPICH2 in Embodiment 1) transmitted from base station apparatus 100 and all candidates for scrambling code replicas (step ST1008).

As a result of identification, when the correlation value of subcarrier set 2 is the maximum correlation value, that is, when the communication scheme information outputted from transmission scheme/frame timing detecting section 420 designates SISO (step ST2006: "No"), scrambling code identifying section 245 calculates correlations between a CPICH (CPICH1 in Embodiment 1) transmitted from base station apparatus 100 and all candidates for scrambling code replicas (step ST1010).

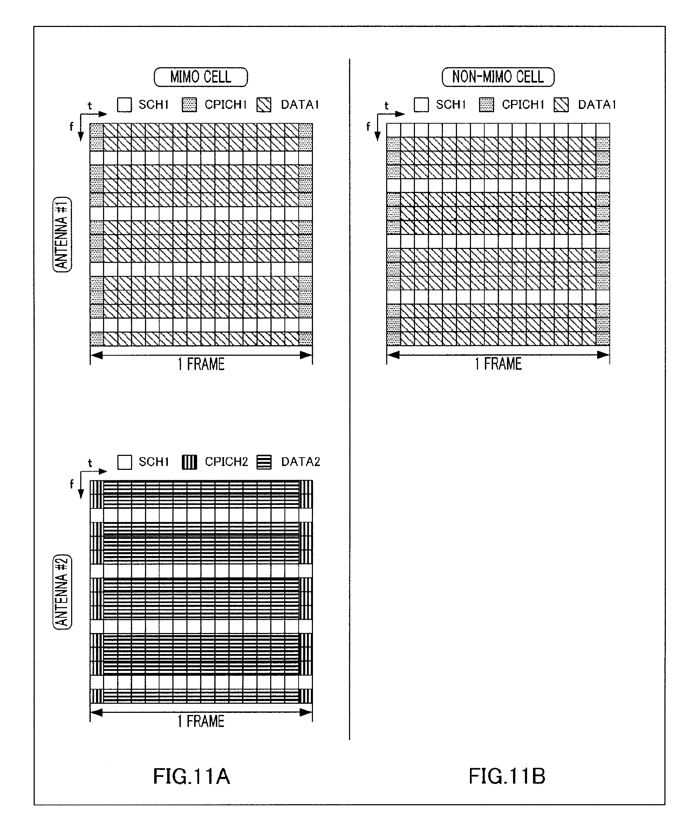

In addition, FIG.8 shows an OFCDM frame format, but this is by no means limiting, and the OFDM frame format as shown in FIG.11 is also possible.

In a transmission format for MIMO cell use in FIG. 11A, an SCH1 sequence is mapped to the same subcarriers for antenna #1 and antenna #2, but this only defines subcarriers for SCH1 use, and a method for transmitting an SCH1 sequence is not particularly defined. Generally, it is possible to utilize various methods such as a method of transmitting an SCH1 sequence only from antenna #1 and a method of using TSTD (Time Switched Transmit Diversity) that switches transmission antennas per TTI or per frame. The present invention does not particularly define a method of distributing SCH sequences between transmission antennas, and it is only necessary to make subcarrier positions for transmitting an SCH1 sequence common.

Further, in the above description, the information of the number of antennas for use is used as communication scheme information, and a frame where subcarriers to which an SCH sequence is mapped are changed according to MIMO communication or communication other than MIMO communication, but this is by no means limiting, and, even when MIMO communication is employed, it is also possible to utilize a frame where subcarriers to which an SCH sequence is mapped are changed according to the number of antennas for use. The point is to distinguish between MIMO communication and communication other than MIMO communication, and further, even in MIMO communication, distinguish between differences in communication schemes such as the number of antennas for use, by subcarriers to which an SCH sequence is mapped.

In this way, according to Embodiment 2, base station apparatus 300 performs multicarrier communication and has: a plurality of antennas; transmitting section 150 that transmits a frame via the antennas; and frame forming section 310 that forms a frame where a synchronization sequence (SCH sequence) is mapped to different subcarriers according to the number of antennas to be used for transmission out of the plurality of antennas.

By this means, by specifying subcarriers to which an SCH sequence is mapped in the received frame at the frame receiving side (mobile station apparatus 400), it is possible to specify the number of antennas at the transmitting side. As a result, when base station apparatus 300 employs a communication scheme, such as MIMO communication, that transmits different pilot signals from a plurality of antennas, that is, when base station apparatus 300 employs a communication scheme having a larger number of pilot signals than communication schemes, such as SISO communication, that utilize only one antenna, if the communication scheme can be specified at the receiving side, it is possible to identify a base station scrambling code using many pilot signals in the third step of cell search. Therefore, a correlation gain can be obtained, so that it is possible to identify the scrambling code more accurately, and, as a result, realize fast cell search.

Further, according to Embodiment 2, base station apparatus 300 performs multicarrier communication and has: a plurality of antennas; transmitting section 150 that transmits a frame via the antennas using MIMO communication or communication schemes other than MIMO communication; and frame forming section 310 that forms a frame where a synchronization sequence (SCH sequence) is mapped to different subcarriers according to the communication scheme.

Further, according to Embodiment 2, mobile station apparatus 400 performs cell search using the frame transmitted from base station apparatus 300 and has: radio receiving section 210 that receives a frame where a synchronization sequence (SCH sequence) is mapped to different subcarriers according to the number of antennas used at base station apparatus 300; synchronization channel correlating section 410 that calculates correlations by multiplying subcarrier signals to which the synchronization sequence is mapped in the received frame and the synchronization sequence; transmission scheme/frame timing detecting section 420 that detects the frame timing and the number of antennas used at base station apparatus 300 based on the correlation values calculated by synchronization channel correlating section 410; and scrambling code identifying section 245 that extracts a pilot signal from the received frame based on the detected frame timing and the number of antennas, and identifies the base station scrambling code using the extracted pilot signal.

By this means, by specifying subcarriers to which an SCH sequence is mapped in the received frame, it is possible to specify the number of antennas used at the transmitting side. As a result, when base station apparatus 300 employs a communication scheme, such as MIMO communication, that transmits different pilot signals from a plurality of antennas, that is, when base station apparatus 300 employs a communication scheme having a larger number of pilot signals to be transmitted than communication schemes, such as SISO communication, that utilize only one antenna, if the communication scheme can be specified at the receiving side, it is possible to identify the base station scrambling code using many pilot signals in the third step of cell search. Therefore, a correlation gain can be obtained, so that it is possible to identify the scrambling code more accurately, and, as a result, realize fast cell search.

Further, according to Embodiment 2, mobile station apparatus 400 that performs cell search using the frame transmitted from base station apparatus 300, has: radio receiving section 210 that receives a frame where a synchronization sequence (SCH sequence) is mapped to different subcarriers according to the communication scheme employed by base station apparatus 300, specifically, according to MIMO communication or communication schemes other than MIMO communication; synchronization channel correlating section 410 that calculates correlations by multiplying subcarrier signals to which the synchronization sequence is mapped in the received frame and the synchronization sequence; transmission scheme/frame timing detecting section 420 that detects the frame timing and the communication scheme employed by base station apparatus 300 based on the correlation values calculated by synchronization channel correlating section 410; and scrambling code identifying section 245 that extracts a pilot signal from the received frame based on the detected frame timing and communication scheme and identifies the base station scrambling code using the pilot signal.

### (Embodiment 3)

In the frame of Embodiment 1, different SCH sequences (for example, SCH1 sequence and SCH2 sequence) are mapped according to transmission schemes of base station apparatus 100 (for example, MIMO communication scheme or SISO communication scheme). By contrast with this, in Embodiment 3, as with Embodiment 2, a frame is configured by mapping different SCH sequences (for example, SCH1 sequence and SCH2 sequence) according to transmission schemes (for example, MIMO communication scheme or SISO communication scheme), and changing a combination (set) of subcarriers to which an SCH sequence is mapped according to communication schemes. That is, by changing the type of the SCH sequence to be mapped and a subcarrier set to which the SCH sequence is mapped according to communication schemes, the type of the SCH sequence mapped in the received frame and the subcarrier set are specified at the frame receiving side, and thereby the transmission scheme at the transmitting side can be specified.

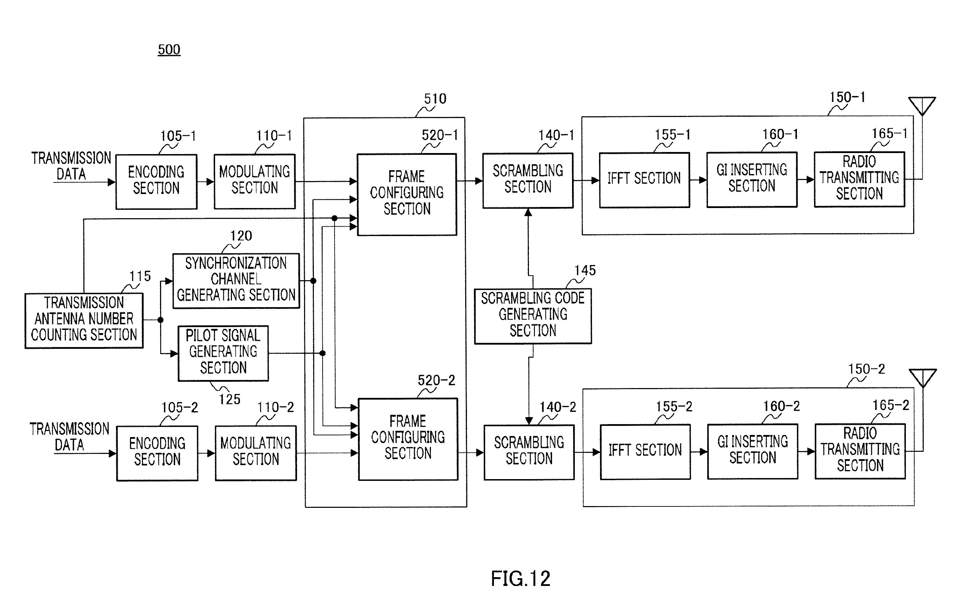

As shown in FIG.12, base station apparatus 500 of Embodiment 3 has frame forming section 510, and this frame forming section 510 has frame configuring sections 520 of the same number as the number of antennas of base station apparatus 500.

In Embodiment 3, when the communication scheme information designates MIMO, frame forming section 510 inserts an SCH1 sequence in the frame by mapping the SCH1 sequence to a first combination (set) of subcarriers. On the other hand, when the communication scheme information designates SISO, frame forming section 510 inserts an SCH2 sequence in the frame by mapping the SCH2 sequence to a second combination (set) of subcarriers. Further, when the communication scheme information designates MIMO, frame forming section 510 inserts CPICH1 to a frame to be transmitted from one of the antennas, and inserts CPICH2 to a frame to be transmitted from the other antenna. On the other hand, when the communication scheme information designates SISO, frame forming section 510 forms a frame by inserting CPICH1.

That is, when the communication scheme employed by base station apparatus 500 is MIMO communication, frame forming section 510 forms a frame where mutually different pilot signals (CPICHs) according to the number of antennas for use are inserted, and an SCH1 sequence is inserted to a first combination (set) of subcarriers. On the other hand, when the communication scheme employed by base station apparatus 500 is SISO communication, frame forming section 510 forms a frame where one type of pilot signals (here, CPICH1) is inserted, and an SCH2 sequence is inserted to a second combination (set) of subcarriers.

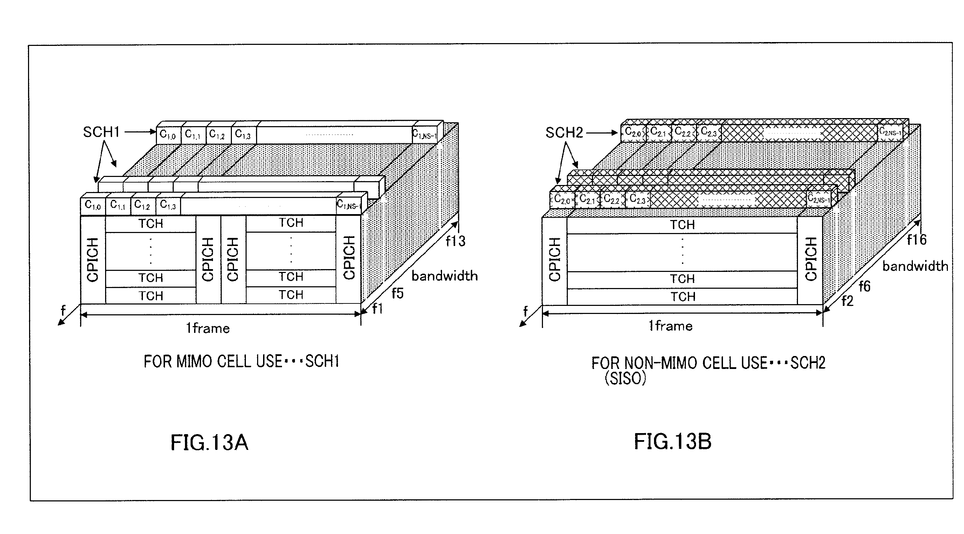

To be more specific, as shown in FIG.13, in the case of the MIMO communication scheme, a frame is formed where an SCH1 sequence is mapped in the time domain aligned with the beginning of the frame in the first combination (set) of subcarriers (FIG.13A) . Further, in the case of the SISO communication scheme, a frame is formed where an SCH2 sequence is mapped in the time domain aligned with the beginning of the frame in the second combination (set) of subcarriers (FIG.13B) . In addition, in FIG.13, the first combination (set) of subcarriers is formed with f₁, f₅, ..., f₁₃, ..., and the second combination (set) of subcarriers is formed with f₂, f₆, ..., f₁₆, .... Further, in the case of the MIMO communication scheme, even if a frame includes CPICHs at the same rate in the SISO communication frame, transmitting two frames from two antennas, for example, is equivalent to including double the CPICHs of the SISO communication frame, and so the frame configuration is as shown in FIG.13A.

When communication scheme information designates MIMO communication, frame forming section 510 outputs the frames formed as described above to different scrambling sections (scrambling sections 140-1 and 140-2). Further, when communication scheme information designates SISO communication, frame forming section 510 outputs the frames formed as described above to one of scrambling sections 140 (here, scrambling section 140-1).

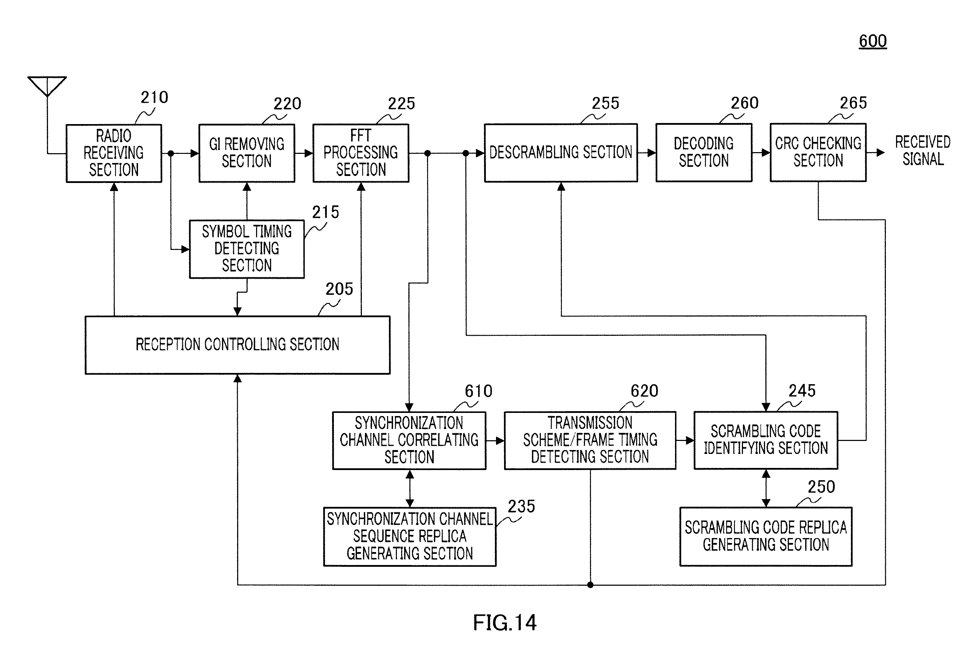

As shown in FIG.14, mobile station apparatus 600 of Embodiment 3 has synchronization channel correlating section 610 and transmission scheme/frame timing detecting section 620.

Synchronization channel correlating section 610 receives the signal after FFT processing from FFT processing section 225 and extracts subcarrier signals of one frame length multiplexed with SCHs. Synchronization channel correlating section 610 then calculates time domain correlations between the subcarrier signals included in each subcarrier set and all candidates for SCH sequence replicas (here, SCH1 sequence replicas and SCH2 sequence replicas), and calculates correlation values by performing in-phase addition. To be more specific, synchronization channel correlating section 610 calculates correlations between subcarrier signals included in subcarrier set 1 and each of the SCH1 sequence and SCH2 sequence, and calculates correlations between subcarrier signals included in subcarrier set 2 and each of the SCH1 sequence and SCH2 sequence.

Synchronization channel correlating section 610 performs power combining of the correlation values per subcarrier set and per SCH sequence, and outputs the power combined result of the correlation values per subcarrier set (here, subcarrier set 1 and subcarrier set 2) and per SCH sequence in each symbol to transmission scheme/frame timing detecting section 620.

Transmission scheme/frame timing detecting section 620 receives the correlation values (after power combining) per subcarrier set and per SCH sequence at each symbol timing in one frame, and detects the timing providing the maximum correlation value among the received correlation values, the type of the subcarrier set (that is, whether the subcarrier set is subcarrier set 1 or subcarrier set 2) and the type of the SCH sequence (that is, whether the SCH sequence is an SCH1 sequence or an SCH2 sequence).

As a result of detection, when the correlation value between the SCH1 sequence and subcarrier set 1 is the maximum correlation value, transmission scheme/frame timing detecting section 620 identifies that the transmission scheme employed by base station apparatus 500 to transmit the frame is MIMO, and identifies the timing providing the maximum correlation value as the frame timing. Transmission scheme/frame timing detecting section 620 then outputs transmission scheme information and the detected frame timing information to scrambling code identifying section 245 and reception controlling section 205.

Further, as a result of detection, when the correlation value between the SCH2 sequence and subcarrier set 2 is the maximum correlation value, transmission scheme/frame timing detecting section 620 identifies that a transmission scheme employed by base station apparatus 500 to transmit the frame is SISO, and identifies the timing providing the maximum correlation value as the frame timing. Transmission scheme/frame timing detecting section 620 then outputs transmission scheme information and the detected frame timing information to scrambling code identifying section 245 and reception controlling section 205.

Further, when the correlation value between the SCH1 sequence and subcarrier set 2 or the correlation value between the SCH2 sequence and subcarrier set 1 is the maximum correlation value, base station apparatus 500 of this embodiment does not transmit such a frame, and so transmission scheme/frame timing detecting section 620 determines that cell search has failed at this time, and performs control to retry cell search. To be more specific, transmission scheme/frame timing detecting section 620 outputs a retry command signal to reception controlling section 205.

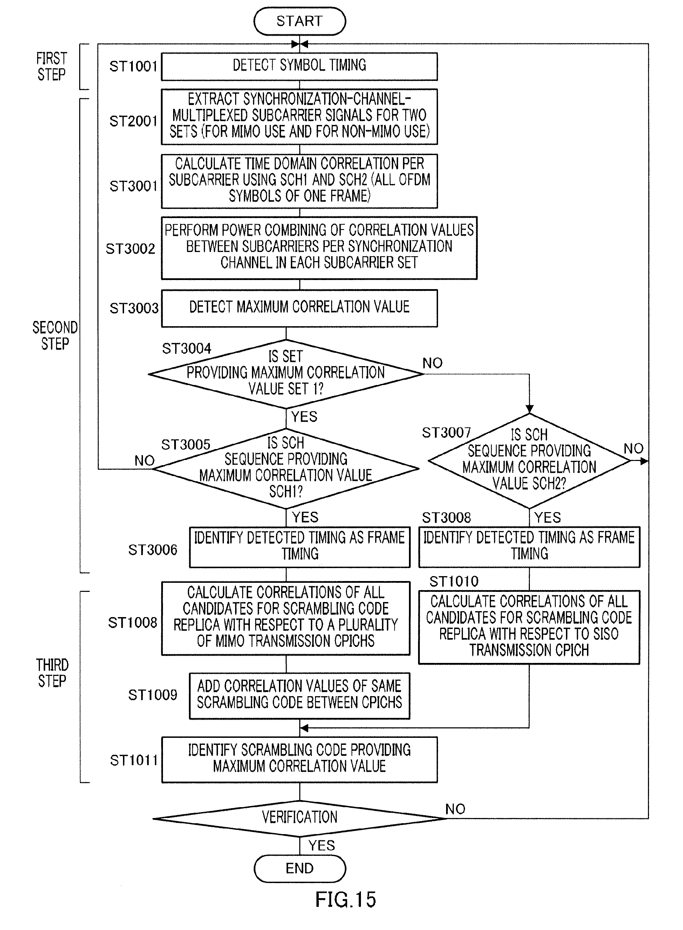

Next, the operation of mobile station apparatus 600 will be described with reference to the flowchart in FIG.15.

Synchronization channel correlating section 610 extracts subcarrier signals of two sets in step ST2001 in the same way as synchronization channel correlating section 410 of Embodiment 2.

In step ST3001, synchronization channel correlating section 610 calculates time domain correlations between the subcarrier signals included in each subcarrier set, extracted in step ST2001 and all candidates for SCH sequence replicas (here, SCH1 sequence replicas and SCH2 sequence replicas), and calculates correlation values by performing in-phase addition. To be more specific, synchronization channel correlating section 610 calculates correlations between the subcarrier signals included in subcarrier set 1 and each of the SCH1 sequence and SCH2 sequence, and calculates time domain correlations between the subcarrier signals included in subcarrier set 2 and each of the SCH1 sequence and SCH2 sequence, over all symbols of one frame.

In step ST3002, synchronization channel correlating section 610 performs power combining of the correlation values calculated in step ST3001, per subcarrier set and per SCH sequence. Synchronization channel correlating section 610 then outputs the power combined result of the correlation values for each subcarrier set (here, subcarrier set 1 and subcarrier set 2) and for each SCH sequence in each symbol to transmission scheme/frame timing detecting section 620.

In step ST3003, transmission scheme/frame timing detecting section 620 receives the correlation values (after power combining) for each subcarrier set and for each SCH sequence at each symbol timing in one frame from synchronization channel correlating section 610, and detects the timing providing the maximum correlation value among the received correlation values, the type of the subcarrier set (that is, whether the subcarrier set is subcarrier set 1 or subcarrier set 2), and the type of the SCH sequence (that is, whether the SCH sequence is an SCH1 sequence or SCH2 sequence).

In step ST3004, transmission scheme/frame timing detecting section 620 determines whether or not the subcarrier set detected in step ST3003 is subcarrier set 1 .

As a result of identification, when the subcarrier set is subcarrier set 1 (step ST3004: "Yes"), transmission scheme/frame timing detecting section 620 determines whether or not the SCH sequence detected in step ST3003 is an SCH1 sequence (step ST3005).

As a result of identification, when the SCH sequence is an SCH1 sequence (step ST3005: "Yes"), transmission scheme/frame timing detecting section 620 identifies that the transmission scheme employed by base station apparatus 500 to transmit the frame is MIMO, and identifies the timing providing the maximum correlation value detected in step ST3003 as the frame timing (step ST3006). Transmission scheme/frame timing detecting section 620 then outputs transmission scheme information and the detected frame timing information to scrambling code identifying section 245 and reception controlling section 205.

As a result of identification, when the SCH sequence is not an SCH1 sequence (step ST3005: "No"), base station apparatus 500 does not transmit such a frame, andsotransmissionscheme/frametimingdetectingsection 620 determines that cell search has failed at this time, and the flow returns to step ST1001.

As a result of identification in step ST3004, when the subcarrier set is not subcarrier set 1 (step ST3004: "No"), transmission scheme/frame timing detecting section 620 identifies whether or not the SCH sequence detected in step ST3003 is an SCH2 sequence (step ST3007).

As a result of identification, when the SCH sequence is an SCH2 sequence (step ST3007: "Yes"), transmission scheme/frame timing detecting section 620 identifies that the transmission scheme employed by base station apparatus 500 to transmit the frame is SISO, and identifies the timing providing the maximum correlation value, detected in step ST3003, as the frame timing (step ST3008). Transmission scheme/frame timing detecting section 620 then outputs transmission scheme information and the detected frame timing information to scrambling code identifying section 245 and reception controlling section 205.

As a result of identification, when the SCH sequence is not an SCH2 sequence (step ST3007: "No"), base station apparatus 500 does not transmit such a frame, and so transmission scheme/frame timing detecting section 620 determines that cell search has failed at this time, and the flow returns to step ST1001.

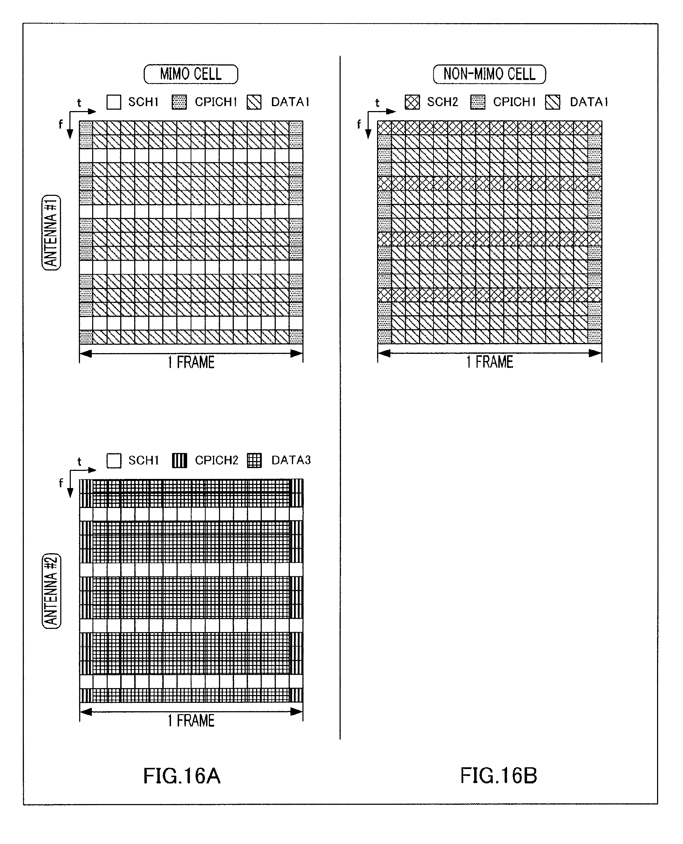

In addition, although FIG.13 shows an OFCDM frame format, this is by no means limiting, and the OFDM frame format shown in FIG.16 is also possible.

In this way, according to Embodiment 3, base station apparatus 500 performs multicarrier communication and has: a plurality of antennas; transmitting section 150 that transmits a frame via the antennas; and frame forming section 510 that forms a frame where different synchronization sequences are mapped to different subcarriers according to the number of antennas used for transmission out of the plurality of antennas.

By this means, by specifying the type of the SCH sequence in the received frame and subcarriers to which the synchronization sequence is mapped at the frame receiving side (mobile station apparatus 600), it is possible to specify the number of antennas used at the transmitting side. As a result, when base station apparatus 500 employs a communication scheme, such as MIMO communication, that transmits different pilot signals from a plurality of antennas, that is, when base station apparatus 500 employs a communication scheme having a larger number of pilot signals to be transmitted than communication schemes, such as SISO communication, that utilize only one antenna, if the communication scheme can be identified at the receiving side, it is possible to identify the base station scrambling code using many pilot signals in the third step of cell search. Therefore, a correlation gain can be obtained, so that it is possible to identify the scrambling code more accurately, and, as a result, realize fast cell search.

Further, according to Embodiment 3, base station apparatus 500 performs multicarrier communication and has: a plurality of antennas; transmitting section 150 that transmits a frame via the antennas using MIMO communication or communication schemes other than MIMO communication; and frame forming section 510 that forms a frame where different synchronization sequences are mapped to different subcarriers according to the communication scheme.

Further, according to Embodiment 3, mobile station apparatus 600 performs cell search using the frame transmitted from base station apparatus 500 and has: radio receiving section 210 that receives a frame where different synchronization sequences (SCH sequences) are mapped to different subcarriers according to the number of antennas used at base station apparatus 500; synchronization channel correlating section 610 that calculates correlations by multiplying subcarrier signals to which the synchronization sequence is mapped in the received frame and all candidates for the synchronization sequence; transmission scheme/frame timing detecting section 620 that detects the frame timing and the number of antennas used at base station apparatus 500 based on the correlation values calculated by synchronization channel correlating section 610; and scrambling code identifying section 245 that extracts a pilot signal from the received frame based on the detected frame timing and the number of antennas, and identifies the base station scrambling code using the pilot signal.

By this means, by specifying the type of the SCH sequence in the received frame and subcarriers to which the synchronization sequence is mapped, it is possible to specify the number of antennas used at the transmitting side. As a result, when base station apparatus 500 employs a communication scheme, such as MIMO communication, that transmits different pilot signals from a plurality of antennas, that is, when base station apparatus 500 employs a communication scheme having a larger number of pilot signals than communication schemes, such as SISO communication, that utilize only one antenna, if the communication scheme can be identified at the receiving side, it is possible to identify the base station scrambling code using many pilot signals in the third step of cell search. Therefore, a correlation gain can be obtained, so that it is possible to identify the scrambling code more accurately, and, as a result, realize fast cell search.

Further, according to Embodiment 3, mobile station apparatus 600 performs cell search using the frame transmitted from base station apparatus 500 and has: radio receiving section 210 that receives a frame where different synchronization sequences (SCH sequences) are mapped to different subcarriers according to a communication scheme employed by base station apparatus 500, specifically, according to MIMO communication or communication schemes other than MIMO communication; synchronization channel correlating section 610 that calculates correlations by multiplying subcarrier signals where the synchronization sequence is mapped in the received frame and all candidates for the synchronization sequence; transmission scheme/frame timing detecting section 620 that detects the frame timing and the communication scheme employed by base station apparatus 500 based on the correlation values calculated by synchronization channel correlating section 610; and scrambling code identifying section 245 that extracts a pilot signal from the received frame based on the detected frame timing and communication scheme and identifies the base station scrambling code using the pilot signal.

Further, mobile station apparatus 600 has a storing section (not shown) that stores correspondence relationships between subcarriers where the synchronization sequence is mapped and the synchronization sequence, and transmission scheme/frame timing detecting section 620 outputs a cell search retry command signal when a combination of the subcarriers and the synchronization sequence providing the maximum correlation value calculated by synchronization channel correlating section 610 does not meet the correspondence relationship.

### (Embodiment 4)

In Embodiment 1 and Embodiment 3, information showing a communication scheme or the number of antennas for use is added to the frame using a plurality of different SCH sequences. The embodiments are described on assumption that SCH sequences to be utilized have no relationship with each other. By contrast with this, in Embodiment 4, different SCH sequences having given regularity with respect to each other are utilized. To be more specific, mutually different SCH sequences where the phase of part of chip sequences of the SCH sequence is changed, are utilized. As a specific example, a case will be described where an embodiment of using the SCH sequence is applied to Embodiment 1.

As with in Embodiment 1, frame forming section 130 inserts different SCH sequences (here, SCH1 sequence and SCH2 sequence) in the frame according to communication scheme information (for example, information of the number of antennas for use). In this embodiment, mutually different SCH sequences where the phase of part of chip sequences of the SCH sequence is changed, are utilized.

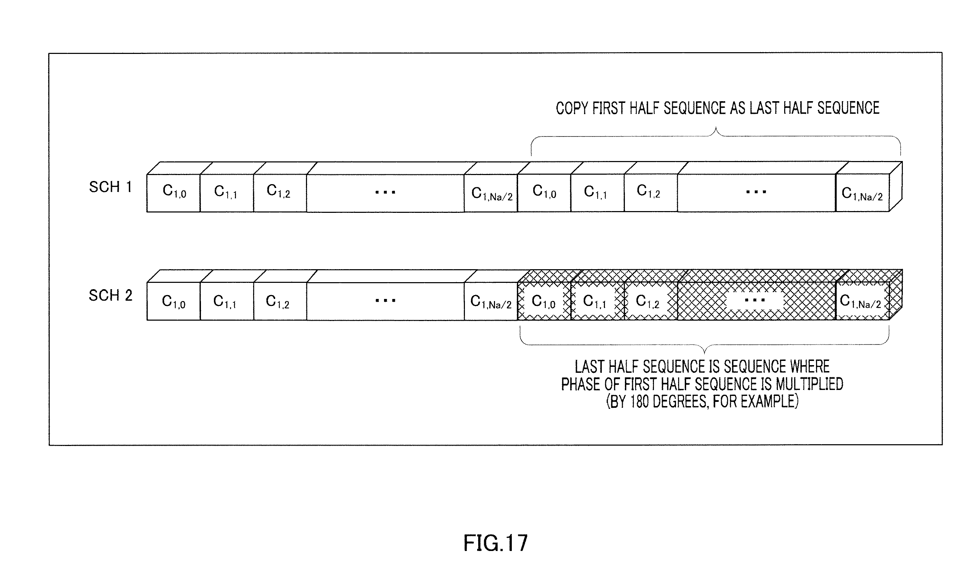

To be more specific, as shown in FIG.17, a sequence where predetermined sequences (in this figure, C_{1,0}, ..., C_{1,Na/2}, which are referred to as basic SCH sequence) are repeated, are utilized as an SCH1 sequence. On the other hand, as an SCH2 sequence, a sequence is utilized where the same predetermined sequence as the SCH1 sequence are utilized in the first-half part and sequence with the phase of the predetermined sequence changed is utilized in the last-half part. Here, the phase shift applied in the last-half part is 180 degrees. Todistinguishbetween the numbers of antennas for use, more patterns of phase shifts are provided, for example, when the number of antennas for use is two, the phase shift is 45 degrees, and, when the number of antennas for use is three, the phase shift is 90 degrees, and it is possible to add antenna number information to the frame using phase shift patterns of the SCH sequence.

Synchronization channel correlating section 230 performs complex multiplication between chips in one basic SCH sequence, reverses the phase shift applied out of all candidates for the above-described phase shift patterns, and performs in-phase addition between chips. By this means, the number of complex multiplications for correlation calculation, is the same as a case where there is one pattern of the SCH sequence, and it is only necessary to perform addition for patterns of the number of all antennas to be utilized (when the number of transmission antennas is two, the transmission antenna number pattern is only 1 or 2) upon in-phase addition. Therefore, it is only necessary to perform complex multiplication once, which is main part of correlation calculation, and it is possible to identify whether the communication is MIMO communication or communication other than MIMO communication, or identify the number of utilized antennas without substantially increasing the amount of calculation compared to a case where there is one pattern of the SCH sequence.

Synchronization channel correlating section 230 outputs the calculated correlation values and phase information upon the calculation, to transmission scheme/frame timing detecting section 240.

Transmission scheme/frame timing detecting section 240 detects phase information providing the maximum correlation value and outputs transmission scheme information (for example, information of the number of antennas for use) corresponding to this phase information to scrambling code identifying section 245.

Scrambling code identifying section 245 performs CPICH reception according to transmission scheme information (for example, information of the number of antennas for use) and performs scrambling identification.

In FIG.17, phase information showing MIMO communication or communication other than MIMO communication is mapped in the last-half part of the generated synchronization sequence, but the phase information may be mapped in the first-half part. Further, for ease of explanation, the last-half part is obtained by multiplying the first-half part by phase information, but this is by no means limiting, and it is also possible to represent MIMO communication or communication other than MIMO communication by multiplying or not multiplying the last-half part of the same basic SCH sequence by the phase information.

Further, it is also possible to convert the number of transmission antennas into phase information and represent MIMO communication or communication other than MIMO communication, as well as only represent MIMO communication or communication other than MIMO communication as described above. For example, when there are four types of candidates for the number of transmission antennas, one, two, three and four (that is, when there are one, two, three and four CPICHs), phase information multiplied by the last-half part may be associated with 0, π/2, π and 3π/2, respectively. It is only necessary to adopt a mechanism where the number of CPICHs can be derived from phase information.

According to Embodiment 4, base station apparatuses (100 and 500) have: a plurality of antennas; transmitting section 150 that transmits a frame through the antennas; and frame forming sections (130 and 510) that form a frame where different synchronization sequences are mapped according to the number of antennas to be used for transmission out of the plurality of antennas, and the frame forming sections (130 and 510) form a frame where the phase of part of chip sequences included in the synchronization sequence is different according to the number of antennas when the different synchronization sequences are mapped according to the number of antennas for use.

By this means, even if the number of candidates for the synchronization sequence increases, it is possible to suppress the amount of calculation processing at the receiving side and specify the number of antennas to be utilized.

Further, base station apparatuses (100 and 500) have: a plurality of antennas; transmitting section 150 that transmits a frame via the antennas; and frame forming sections (130 and 510) that form a frame where different synchronization sequences are mapped according to a communication scheme employed by base station apparatuses (100 and 500), specifically, according to MIMO communication or communication schemes other than MIMO communication, and the frame forming sections (130 and 510) form a frame where the phase of part of chip sequences included in the synchronization sequence is different according to the communication scheme when the different synchronization sequences are mapped according to the communication scheme to be employed.

### Industrial Applicability

The base station apparatus and mobile station apparatus of the present invention perform multicarrier communication and are suitable for use as a base station apparatus that transmits a frame according to a communication scheme and a mobile station apparatus that identifies a communication scheme of the base station apparatus from this frame and performs adaptive cell search according to the communication scheme.

## Claims

1. Abase station apparatus that performs multicarrier communication, comprising:
a plurality of antennas;
a transmitting section that transmits a frame through the antennas; and
a frame forming section that forms a frame where at least one of a synchronization sequence to be mapped and subcarriers to which the synchronization sequence is mapped is different according to a number of antennas to be used for transmission out of the plurality of antennas.

2. The base station apparatus according to claim 1, wherein, when the synchronization sequence to be mapped is different according to the number of antennas for use, the frame forming section forms a frame where a phase of part of chip sequences included in the synchronization sequence is different according to the number of antennas.

3. Amobile station apparatus that performs cell search using a frame transmitted from a base station apparatus, the mobile station apparatus comprising:
a receiving section that receives a frame where different synchronization sequences are mapped according to a number of antennas used by the base station apparatus;
a correlating section that calculates correlations by sequentially multiplying the received frame and all candidates for the synchronization sequence;
a detecting section that detects a frame timing and the number of antennas used by the base station apparatus based on the correlation values calculated by the correlating section; and
a scrambling code identifying section that extracts a pilot signal from the received frame based on the detected frame timing and the number of antennas and identifies a base station scrambling code using the pilot signal.

4. Amobile station apparatus that performs cell search using a frame transmitted from a base station apparatus, the mobile station apparatus comprising:
a receiving section that receives a frame where a synchronization sequence is mapped to different subcarriers according to a number of antennas used by the base station apparatus;
a correlating section that calculates correlations by sequentially multiplying subcarrier signals to which the synchronization sequence is mapped in the received frame and the synchronization sequence;
a detecting section that detects a frame timing and the number of antennas for use by the base station apparatus based on the correlation values calculated by the correlating section; and
a scrambling code identifying section that extracts a pilot signal from the received frame basedon the detected frame timing and the number of antennas and identifies a base station scrambling code using the pilot signal.

5. Amobile station apparatus that performs cell search using a frame transmitted from a base station apparatus, the mobile station apparatus comprising:
a receiving section that receives a frame where different synchronization sequences are mapped to different subcarriers according to the number of antennas used by the base station apparatus;
a correlating section that calculates correlations by sequentially multiplying subcarrier signals to which the synchronization sequence is mapped in the received frame and all candidates for the synchronization sequence;
a detecting section that detects a frame timing and the number of antennas used by the base station apparatus based on the correlation values calculated by the correlating section; and
a scrambling code identifying section that extracts a pilot signal from the received frame based on the detected frame timing and the number of antennas, and identifies a base station scrambling code using the pilot signal.

6. The mobile station apparatus according to claim 5, further comprising a storing section that stores correspondence relationships between subcarriers where the synchronization sequence is mapped and the synchronization sequence,
wherein the detecting section outputs a cell search retry command signal when a combination of the subcarriers and the synchronization sequence providing a maximum correlation value calculated by the correlating section does not meet the correspondence relationship.
